# EUROPEAN PATENT APPLICATION

(11) **EP 1 739 938 A1**
(43) Date of publication of application: **03.01.2007**
(21) Application number: 06004594.5
(22) Date of filing: 07.03.2006
(51) Int. Cl.: H04M 1/725, H04Q 7/32

(54) **Mobile terminal for processing messages with communication service cut-off mode, and corresponding method**

(30) Priority: 28.06.2005 KR 2005056485
(71) Applicant: Samsung Electronics Co., Ltd., Suwon-si, Gyeonggi-Do (KR)
(72) Inventor: Kim, Dong-Man, Yeongtong-gu Suwon-si Gyeonggi-do (KR); Kim, Hwan, Yeongtong-gu Suwon-si Gyeonggi-do (KR)
(74) Representative: Lang, Johannes

(57) **Abstract**

Disclosed is a method for processing messages in a mobile terminal having a communication service cutoff mode for disabling voice calls and message transmissions. The method includes the steps of storing one or more input messages when a user presses a key to send the messages during the communication service cutoff mode and automatically sending each stored message to a corresponding recipient upon cancellation of the communication service cutoff mode. The messages input during the communication service cutoff mode are automatically sent to corresponding recipients upon cancellation of that mode, thereby improving user convenience.

## Description

### BACKGROUND OF THE INVENTION

### Field of the Invention:

The present invention relates to a mobile terminal. More particularly, the present invention relates to a mobile terminal and method for processing messages in a communication service cutoff mode that disables voice calls and message transmissions.

### Description of the Related Art:

Generally, the term "mobile terminals" refer to handheld devices used for data transmissions or wireless communications while moving, which comprise cellular phones, Personal Digital Assistants (PDA), Personal Communication Services (PCS) phones, International Mobile Telecommunication-2000 (IMT-200) terminals and Global System for Mobile Communication (GSM) terminals.

Mobile terminals have quickly attained worldwide popularity as a necessity among people of all ages. It is a current trend that mobile terminals are becoming smaller, sleeker and lighter to improve portability and multifunctional to implement various functions and services.

Mobile terminals have gone beyond merely being telephones and now integrate various additional functions such as a short message service, memory function for storing and searching for telephone numbers, multimedia functions, for example, MP3 and camera, and communication service cutoff function.

Mobile terminals with such additional functions have brought users greater convenience and benefit in their daily life.

Among those functions, the communication service cutoff is a so-called "flight mode" that turns off only the communication function of a mobile terminal upon the user's key operation during flight or where no communication device is allowed. In the flight mode, other multimedia functions of the mobile terminal can be used with the communication function turned off.

Users cannot make phone calls or send messages whilst in the flight mode. They can input and send messages only when arriving at destination and canceling the flight mode. It may cause a lot of trouble if they fail to send important messages in time or forget to send the messages even upon arriving at their destination.

### SUMMARY OF THE INVENTION

Accordingly, the present invention has been made to address the above-mentioned problems, and an object of the present invention is to provide a mobile terminal having a communication service cutoff function that disables voice calls and message transmissions and a method for processing messages in a communication service cutoff mode.

Another object of the present invention is to provide a mobile terminal having a communication service cutoff function that disables voice calls and message transmissions and a method for effectively processing messages in a communication service cutoff mode.

In order to accomplish the above objects of the present invention, a method is provided for processing messages in a mobile terminal having a communication service cutoff mode for disabling voice calls and message transmissions. The method comprises storing an input message when a user inputs a request to send the message during the communication service cutoff mode and automatically sending the stored message to a corresponding recipient when the communication service cutoff mode is cancelled.

In accordance with another aspect of the present invention, a mobile terminal having a communication service cutoff mode for disabling voice calls and message transmissions is provided. The mobile terminal comprises a memory for storing a message input by a user, a control unit for storing the input message in the memory when the user inputs a request to send the message in the communication service cutoff mode and detecting the stored message upon cancellation of the communication service cutoff mode to send the message to a corresponding recipient, and a RF transceiver for sending the detected message to the recipient under the control of the control unit.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating a mobile terminal according to an exemplary embodiment of the present invention;
FIG. 2 is a flow chart illustrating a process for storing and sending a message on a mobile terminal according to an exemplary embodiment of the present invention;
FIG. 3 is a flow chart illustrating the storage of a message input by a user in the process of FIG. 2 according to an exemplary embodiment of the present invention; and
FIG. 4 is a flow chart illustrating the detection and transmission of a stored message in the process of FIG. 2 according to an exemplary embodiment of the present invention.

Throughout the drawings, like reference numerals will be understood to refer to like parts, components and structures.

### DETAILED DESCRIPTION OF EXEMPALRY EMBODIMENTS

Hereinafter, a exemplary embodiment of the present invention will be described with reference to the accompanying drawings. In the following description of the present invention, a detailed description of known functions and configurations incorporated herein will be omitted for clarity and conciseness.

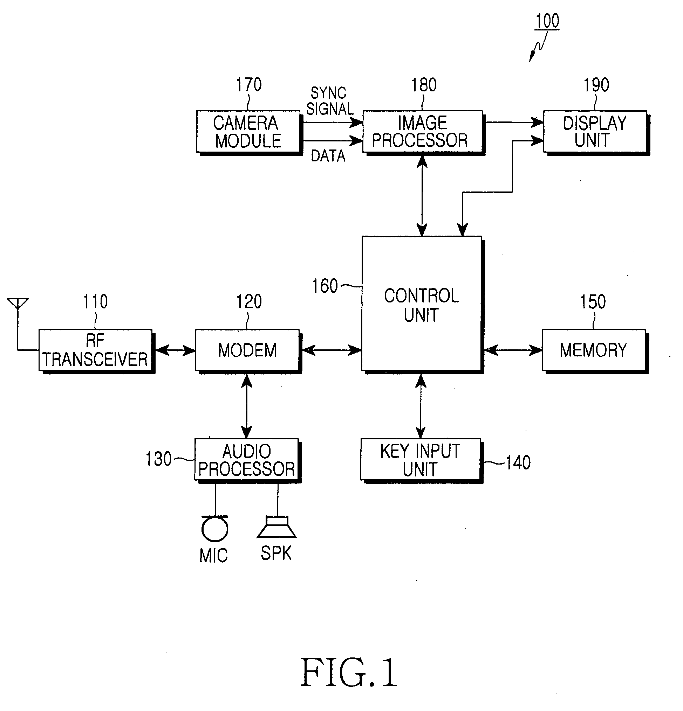

FIG. 1 is a block diagram illustrating a mobile terminal according to an exemplary embodiment of the present invention.

The mobile terminal 100 comprises a RF transceiver 110, a modem 120, an audio processor 130, a key input unit 140, a memory 150, a control unit 160, a camera module 170, an image processor 180 and a display unit 190.
The RF transceiver 110 transmits or receives audio, text, image and control data under the control of the control unit 160. The RF transceiver 110 comprises a RF transmitter for performing upward conversion and amplification of the frequency of a transmitted signal and a RF receiver for amplifying a received signal with low noise and performing downward conversion of the frequency of the signal.

The modem 120 transmits an input message to an intended recipient under the control of the control unit 160.

The message can be a Short Message Service (SMS), Multimedia Messaging Service (MMS) or email message. The recipient should preferably be a mobile phone number or an email address to which the message is sent.

When the mobile terminal 100 is set to a communication service cutoff mode, power supplied to the RF transceiver 110 is cut off by the control unit 160, which disables the transmission or receipt of RF signals.

The modem 120 comprises a transmitter for coding and modulating a signal which will be transmitted and a receiver for demodulating and decoding a received signal.

The audio processor 130 may comprise a codec consisting of a data codec for processing packet data and an audio codec for processing an audio signal such as a speech signal.

The audio processor 130 modulates an electric signal input from a microphone into audio data, while demodulating audio data encoded and input from the RF transceiver 110 into an electric signal and outputting the electric signal through a speaker. The audio processor 130 should preferably comprise a codec to convert a digital audio signal received by the RF transceiver 110 into an analog signal and reproduce the analog signal and to convert an analog audio signal generated from a microphone into a digital audio signal. The codec consists of a data codec for processing packet data and an audio codec for processing an audio signal such as a speech signal. The codec can be provided as an independent element or included in the control unit 160.

The key input unit 140 having a key matrix structure (not shown) is provided with alphanumeric keys, function keys and an external volume key. The key input unit 140 outputs a signal corresponding to the user's key input to the control unit 160.

The memory 150 may comprise a program memory and a data memory. According to an exemplary embodiment of the present invention, the memory 150 stores programs for controlling general operations of the mobile terminal 100 and various information selected by the user.

Under the control of the control unit 160, the memory 150 also stores messages input by the user in the communication service cutoff mode, together with corresponding recipients and times of storage, as shown in Table 1.

The input messages and the corresponding recipients can be stored in a separate storage area in the memory 150.

**[Table 1]**

| | Message 1 | Message 2 | Message 3 |
|---|---|---|---|
| Recipient | 011-123-4567 | 011-234-5555 | dr-k96@hanmail.net |
| Time of Storage | 6/20 11:00 am | 6/20 11:30 am | 6/20 1:00 pm |

As shown in Table 1, the input messages are stored in the memory 150, together with the corresponding recipients, for example, mobile phone numbers or email addresses, and times of storage.

The control unit 160 controls overall operations of the mobile terminal 100. When the user selects a menu for inputting a message in the communication service cutoff mode, the control unit 160 activates a message input mode which comprises a short message input mode and an email input mode.

When the user presses a key to send an input message in the message input mode, the control unit 160 controls the memory 150 to store the message. At this time, the control unit 160 should preferably request the user to input a recipient of the message by displaying a text request on the display unit 190 or outputting a voice request through the audio processor 130.

When the user inputs an intended recipient through the key input unit 140 in response to the text or voice request, the control unit 160 then controls the memory 150 to store the input message and recipient. Preferably, the control unit 160 should also store the exact time of storage. If two or more messages are stored in the memory 150 in the communication service cutoff mode, the stored messages will be sent in the same order in which they were stored.

Upon cancellation of the communication service cutoff mode, the control unit 160 detects the message stored in the memory 150 and controls the RF transceiver 110 to send the message to the corresponding recipient.

If the mobile terminal 100 has a camera function, it may comprise a camera module 170.

The camera module 170 has a lens (not shown) capable of zooming in and out. The camera module 170 takes image data through the lens.

The camera module 170 comprises a camera sensor (not shown) for converting a photographed optical signal into an electrical signal and a signal processor (not shown) for converting an analog image signal photographed by the camera sensor into digital data.

Supposing that the camera sensor is a charge coupled device (CCD) sensor, the signal processor can be a digital signal processor (DSP). The camera sensor and the signal processor can be either integrated into a single element or separated as independent elements.

The image processor 180 generates picture data for displaying an image signal output from the camera module 170.

The image processor 180 processes image signals output from the camera module 170 in frames. Also, the image processor 180 adjusts the frame image data to conform to the features, such as size and resolution, which are displayable on the display unit 190, and outputs the adjusted frame image data. The image processor 180 comprises an image codec to compress the frame image data displayed on the display unit 190 in a preset manner or restore the compressed frame image data to the original frame image data.

Assuming that the image processor 180 has an on screen display (OSD) function, it can output OSD data according to the displayed picture size under the control of the control unit 160.

The display unit 190 outputs various display data generated by the mobile terminal. The display unit 190 may comprise an LCD. When the LCD is a touch screen, it can serve as an input device.

The display unit 190 displays image data output from the image processor 180 and user data output from the control unit 160.

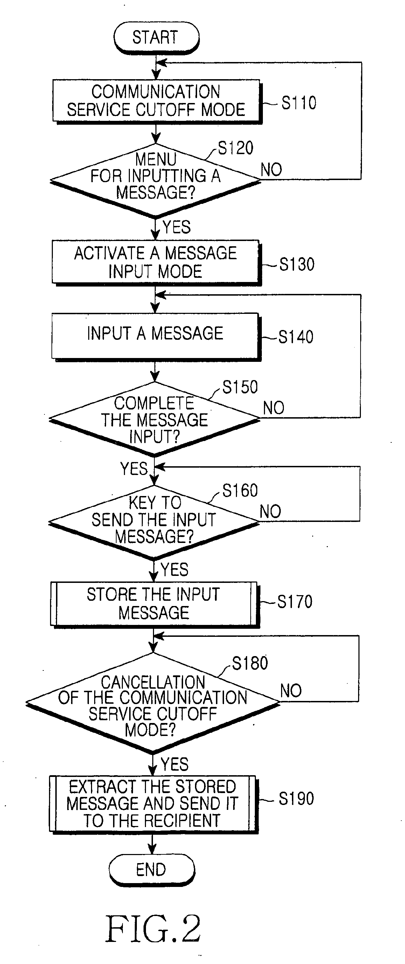

FIG. 2 is a flow chart illustrating the operations of a mobile terminal for storing and sending messages according to an exemplary embodiment of the present invention.

Referring to FIGs. 1 and 2, the control unit 160 sets the mobile terminal 100 to a communication service cutoff mode for disabling voice calls and message transmissions according to the user's request at step S110.

The control unit 160 determines whether the user presses a key to select a menu for inputting a message in the communication service cutoff mode at step S120.

When the user selects the menu for inputting a message, the control unit 160 activates a message input mode at step S 130 in the communication service cutoff mode. In other words, the communication service cutoff mode is maintained during the message input mode.

The control unit 160 allows the user to input a message through the key input unit 140 S 140. The message can be a SMS, MMS or email message.

Upon completion of the user's message input at step S 150, the control unit 160 detects whether the user inputs a request, for example, a send key, to send the input message at step S160.

When the user inputs the request to send the input message, the control unit 160 stores the message in the memory 150 at step S 170. Preferably, the control unit 160 should also store a recipient of the message. More preferably, the control unit 160 should store the recipient and the exact time when the message was stored. The control unit 160 may store the input message and the corresponding recipient in a separate storage area in the memory 150.

The control unit 160 checks whether the user presses a key to cancel the communication service cutoff mode at step S 180.

When the communication service cutoff mode is cancelled, the control unit 160 detects the message stored in the memory 150 and controls the RF transceiver 110 to send the message to the corresponding recipient at step S 190.

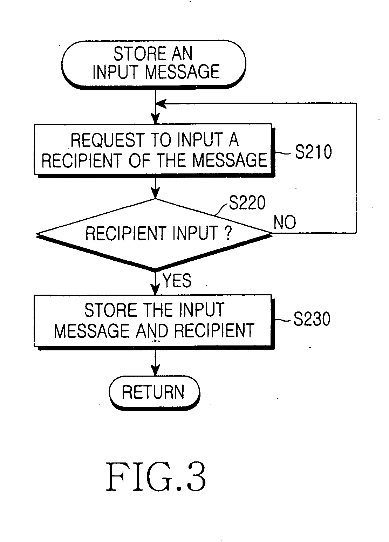

FIG. 3 is a flow chart illustrating the storage of a message input by the user in the process of FIG. 2. In other words, FIG. 3 shows sub-steps of S 170 in FIG. 2.

Referring to FIGs. 1 and 3, when the user presses a key to send an input message, the control unit 160 requests the user to input a recipient of the message at step S210. At this time, the control unit 160 may display a text request on the display unit 190 or outputs a voice request through the audio processor 130.

Then the control unit 160 checks whether the user inputs the recipient through the key input unit 140 at step S220.

Upon input of the recipient, the control unit 160 stores both the input message and recipient in the memory 150 at step S230. Preferably, the control unit 160 should also store the exact time of storage. If two or more messages are stored in the memory 150 in the communication service cutoff mode, the control unit 160 will send the messages according to the times of storage, i.e., in the same order in which they were stored.

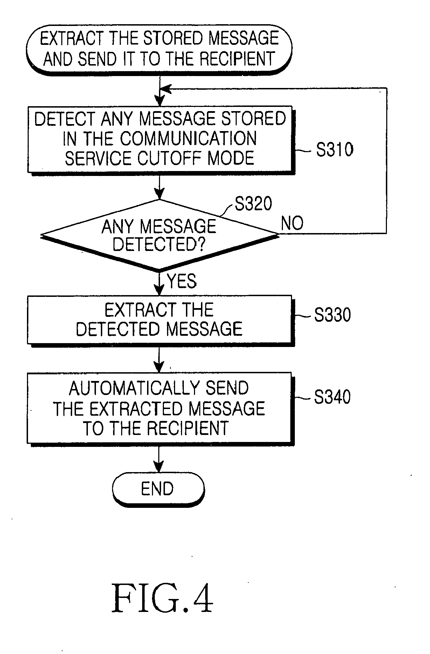

FIG. 4 is a flow chart illustrating the detection and transmission of a stored message in the process of FIG. 2. In other words, FIG. 4 shows sub-steps of S 190 in FIG. 2.

Referring to FIGs. 1 and 4, when the user presses a key to cancel the communication service cutoff mode, the control unit 160 detects any message stored in the memory 150 during the communication service cutoff mode at step S310.

When a message is detected in the memory 160 at step S320, the control unit 160 extracts the detected message from the memory 150 at step S330.

Then the control unit 160 automatically sends the extracted message to the corresponding recipient through the RF transceiver 110 at step S340. If there are two or more messages stored in the communication service cutoff mode, the control unit 160 should preferably send the messages according to the times of storage, in other words, in the same order in which they were stored.

As explained above, exemplary embodiments of the present invention provide a method for effectively processing messages input in a mobile terminal offering a communication service cutoff mode for disabling voice calls and message transmissions. Messages input during the communication service cutoff mode are automatically sent to corresponding recipients upon cancellation of that mode, thereby improving user convenience.

Although exemplary embodiments of the present invention has been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for processing messages in a mobile terminal having a communication service cutoff mode for disabling voice calls and message transmissions, the method comprises:
storing one or more input messages when a user presses a key to send the messages during the communication service cutoff mode; and
automatically sending each stored message to a corresponding recipient upon cancellation of the communication service cutoff mode.

2. The method as claimed in claim 1, wherein said input messages comprise at least one of Short Message Service (SMS), Multimedia Messaging Service (MMS) and email messages.

3. The method as claimed in claim 1, wherein said recipient comprises at least one of a mobile phone number and an email address.

4. The method as claimed in claim 1, wherein said step of storing input messages comprises:
when the user selects a menu for inputting a message during the communication service cutoff mode, activating a message input mode to enable the user to input messages;
when the user presses a key to send the input messages, requesting the user to input recipients corresponding to the messages; and
when the recipients are input, storing the input messages and recipients.

5. The method as claimed in claim 1, wherein said step of sending each stored message comprises:
extracting the stored messages upon cancellation of the communication service cutoff mode; and
sending the extracted messages to the corresponding recipients in the order of storage.

6. The method as claimed in claim 1, wherein said step of sending each stored message comprises:
upon cancellation of the communication service cutoff mode, detecting any message stored in the communication service cutoff mode; and
when a message is detected, extracting the detected message and automatically sending the extracted message to the corresponding recipient.

7. A mobile terminal having a communication service cutoff mode for disabling voice calls and message transmissions, the mobile terminal comprises:
a memory for storing messages input by a user;
a control unit for storing the input messages in the memory when the user presses a key to send the messages during the communication service cutoff mode and detecting the stored messages upon cancellation of the communication service cutoff mode to send each message to a corresponding recipient; and
a RF transceiver for sending each detected message to the corresponding recipient under the control of the control unit.

8. The mobile terminal as claimed in claim 7, wherein said messages comprise at least one of Short Message Service (SMS), Multimedia Messaging Service (MMS) and email messages.

9. The mobile terminal as claimed in claim 7, wherein said recipient comprises at least one of a mobile phone number and an email address.

10. The mobile terminal as claimed in claim 7, wherein said control unit requests an input of recipients corresponding to the messages when the user presses a key to send the messages.

11. The mobile terminal as claimed in claim 10, wherein said control unit stores the messages in the memory, together with the recipients as input by the user.

12. The mobile terminal as claimed in claim 8, wherein said control unit stores the input messages in a separate storage area in the memory.

13. The mobile terminal as claimed in claim 8, wherein said control unit extracts the messages stored in the memory upon cancellation of the communication service cutoff mode and automatically sends the extracted messages to the corresponding recipients in the order of storage.
